# FASCICULE DE BREVET EUROPEEN

(11) **EP 1 647 757 B1**
(45) Date de publication et mention de la délivrance du brevet: **08.09.2010**
(21) Numéro de dépôt: 05356185.8
(22) Date de dépôt: 13.10.2005
(51) Int. Cl.: F16L 37/23

(54) **Partie mâle d'un raccord rapide, ce raccord rapide et jeu de deux tels raccords rapides**
Schnellkupplungsstecker, dazugehörige Schnellkupplung und Satz aus zwei solchen Schnellkupplungen
Male part of a quick-acting coupling, quick-acting coupling and set of two of those quick-acting couplings

(30) Priorité: 14.10.2004 FR 0410868
(43) Date de publication de la demande: 19.04.2006
(73) Titulaire: STAUBLI FAVERGES, 74210 Faverges (FR)
(72) Inventeur: Durieux, Christophe, 73200 Gilly sur Isere (FR); Tiberghien, Alain-Christophe, 74320 Sevrier (FR)
(74) Mandataire: Colombet, Alain André

(56) Documents cités:
- FR-A- 1 556 209
- GB-A- 1 533 080

## Description

La présente invention se rapporte au domaine des circuits de refroidissement des moules, notamment pour le moulage par injection de pièces en polymère. Plus précisément, elle concerne la partie mâle d'un raccord rapide de jonction temporaire d'un tuyau d'acheminement d'un liquide de refroidissement d'un tel moule à un conduit ménagé dans ce moule. Elle concerne également un tel raccord rapide et un jeu de tels raccords rapides.

Un raccord rapide pouvant être utilisé pour raccorder temporairement un tuyau à un moule est décrit dans le brevet français N° 1 556 209. Il comporte une partie femelle et une partie mâle, dont une fiche mâle est destinée à être introduite dans cette partie femelle. Normalement, la partie femelle et la partie mâle du raccord rapide sont respectivement fixées sur le moule d'injection et à une extrémité du tuyau à raccorder.

Outre la fiche mâle, la partie mâle du raccord comporte des billes de verrouillage, qu'une bague montée à coulissement sur la fiche mâle est à même de manoeuvrer entre deux positions. Dans l'une de ces deux positions, les billes sont en saillie en dehors de la bague et peuvent pénétrer dans une gorge interne de la partie femelle de manière à interdire la dissociation des parties mâle et femelle du raccord. Dans leur autre position, les billes sont escamotées, si bien que la partie mâle peut être montée sur la partie femelle ou séparée de celle-ci.

Le déverrouillage du raccord peut être effectué en poussant la fiche mâle dans le sens de son introduction dans la partie femelle, c'est-à-dire vers une position dans laquelle cette fiche mâle est engagée encore plus profondément dans la partie femelle que lorsque le raccord est verrouillé. Par conséquent, il existe un risque que, lors du raccordement, la fiche mâle soit engagée jusque dans cette position et y reste malgré l'action d'un ressort de rappel de la bague vers une position dans laquelle les billes de verrouillage sont en saillie. En effet, le tuyau à raccorder, qui est flexible, est souvent courbé élastiquement lors de son raccordement sur le moule et peut de ce fait exercer une force en biais agissant à l'encontre de celle exercée par le ressort de rappel de la bague.

Il existe également un risque que, du fait de frottements sur un joint assurant l'étanchéité entre les parties mâle et femelle du raccord, l'opérateur pense avoir suffisamment enfoncé la fiche mâle dans la partie femelle, alors que tel n'est pas le cas et que les billes de verrouillage n'ont pas atteint la gorge interne de la partie femelle.

Alors qu'il peut conduire à une éjection de la fiche mâle en dehors de la partie femelle et donc à des blessures telles que des brûlures, un mauvais verrouillage des parties mâle et femelle du raccord l'une dans l'autre a d'autant plus de chances de se produire que les moules d'une machine de moulage par injection sont très souvent changés, que le grand nombre de circuits de refroidissement nécessaire à l'obtention d'un très bon refroidissement dans le cas fréquent de pièces à mouler complexes et/ou dans le cas encore plus fréquent de cadences de production élevées se traduit par une grande quantité de raccords souvent concentrés dans un espace réduit, que la concentration de nombreux raccords dans un espace réduit diminue l'accessibilité de ces raccords et que le raccordement des tuyaux au moule est généralement effectué par un personnel peu qualifié.

L'invention a donc au moins pour but d'améliorer la sûreté des machines de moulage par injection de pièces en polymère.

A cet effet, l'invention a pour objet une partie mâle de raccord rapide de jonction temporaire d'un tuyau d'acheminement d'un liquide de refroidissement vers ou depuis un conduit ménagé dans un moule et destiné à être parcouru par le liquide de refroidissement, cette partie mâle comprenant une fiche mâle destinée à être introduite dans une partie femelle du raccord rapide, des billes mobiles de verrouillage de la fiche mâle dans ladite partie femelle et une bague de manoeuvre des billes de verrouillage, cette bague de manoeuvre étant mobile par rapport à la fiche mâle entre une première position, dans laquelle les billes de verrouillage peuvent être escamotées radialement à l'intérieur de la bague de manoeuvre, et une deuxième position qui est décalée axialement de la première position dans le sens d'introduction de la fiche mâle dans ladite partie femelle, vers laquelle est rappelée élastiquement ladite bague de manoeuvre et dans laquelle les billes de verrouillage sont contraintes de dépasser latéralement de la bague de verrouillage, la fiche mâle étant percée d'un passage pour le liquide de refroidissement, caractérisée en ce que cette fiche mâle porte un repère visuel qui est au moins partiellement découvert lorsque ladite bague de manoeuvre est dans sa deuxième position et qui est masqué par ladite bague de manoeuvre lorsque cette bague de manoeuvre est dans sa première position.

Selon d'autres caractéristiques avantageuses de cette partie mâle de raccord rapide :
- le repère visuel est un anneau qui est enfilé sur ladite fiche mâle et qui a un aspect différent de celui de cette fiche mâle ;
- ladite fiche mâle comporte une butée pour ledit anneau et est pourvue d'un ressort qui rappelle la bague de verrouillage vers sa deuxième position tout en poussant ledit anneau contre ladite butée ;
- ledit anneau est réalisé en polymère ;
- ledit anneau guide la bague de verrouillage lors d'un mouvement de coulissement par rapport à la fiche mâle et est réalisé dans un matériau tel que le coefficient de frottement du matériau de la bague de verrouillage sur le matériau dudit anneau est inférieur au coefficient de frottement du matériau de la bague de verrouillage sur le matériau de ladite fiche mâle ;
- ledit anneau est clipsé sur un relief de la fiche mâle ;
- ledit anneau porte un relief radial interne apte à être engagé sur ou dans un relief complémentaire périphérique externe de la fiche et à y être immobilisé par coopération de formes.

L'invention a également pour objet un raccord rapide de jonction temporaire d'un tuyau d'acheminement d'un liquide de refroidissement vers ou depuis un conduit ménagé dans un moule et destiné à être parcouru par le liquide de refroidissement, ce raccord rapide comprenant une partie femelle comportant au moins un relief interne tel que des billes peuvent s'y engager de manière à verrouiller le raccord en position assemblée, caractérisé en ce qu'il comporte une partie mâle telle que définie ci-dessus et complémentaire de la partie femelle.

Selon d'autres caractéristiques avantageuses de ce raccord rapide :
- ladite partie femelle et ladite partie mâle équipent respectivement le moule et le tuyau, et
- la partie femelle porte un repère visuel qui a un aspect coordonné avec celui du repère visuel porté par la fiche mâle.

L'invention a encore pour objet un jeu de deux raccords tels que définis ci-dessus, l'aspect des repères visuels du premier raccord différant de l'aspect des repères visuels du deuxième raccord.

L'invention sera bien comprise à la lecture de la description qui va suivre, donnée uniquement à titre d'exemple et faite en se référant aux dessins annexés, parmi lesquels :
- la figure 1 est une coupe schématique et axiale d'un raccord qui est conforme à l'invention et qui raccorde un tuyau flexible, partiellement représenté, d'acheminement d'un liquide de refroidissement à un moule, également partiellement représenté, de moulage par injection de pièces en polymère,
- la figure 2 est une coupe qui est analogue à la figure 1 et représente le même raccord que cette figure 1, mais sur laquelle les deux parties complémentaires mâle et femelle de ce raccord sont dissociées, le moule et le tuyau flexible étant omis pour la clarté du dessin,
- la figure 3, qui est une coupe analogue à la figure 2, illustre une étape de l'assemblage des parties mâle et femelle du raccord des figures 1 et 2,
- la figure 4 est un agrandissement du médaillon IV tracé à la figure 3,
- la figure 5 est une coupe analogue à la figure 2 et illustre dans quelle configuration du raccord des figures 1 à 4 peut avoir lieu la dissociation de ses parties mâle et femelle, et
- la figure 6 est une coupe analogue à la figure 2 et illustre un cas de mauvais verrouillage des parties mâle et femelle du raccord.

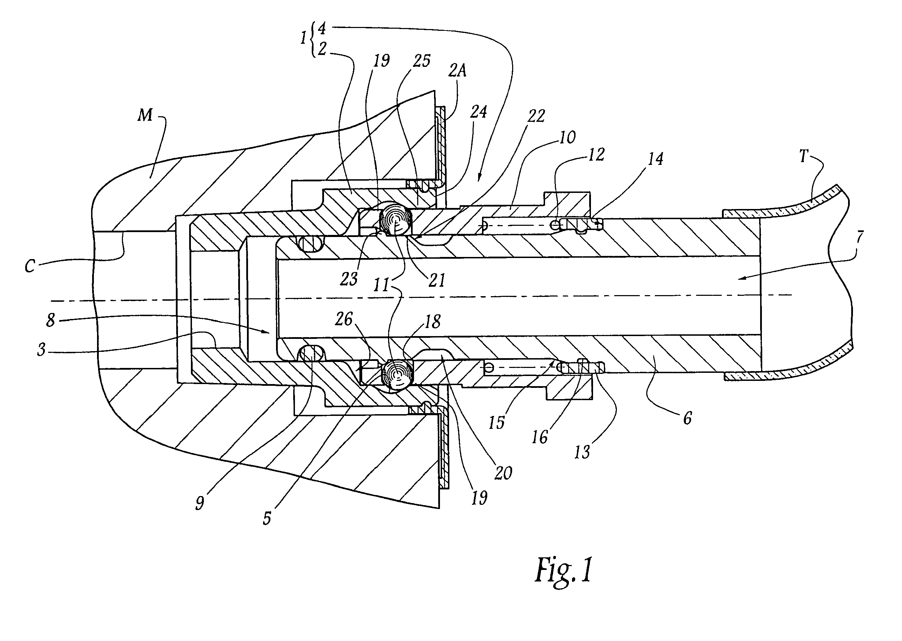

Sur la figure 1, un raccord rapide 1 raccorde un tuyau flexible T à une extrémité d'un conduit C ménagé dans un moule M de moulage par injection de pièces en polymère, ce tuyau T étant destiné à acheminer un liquide caloporteur de refroidissement du moule M. Une partie femelle 2 du raccord 1 est fixée par vissage ou de toute autre manière appropriée au moule M, de telle manière qu'un passage 3 qui la traverse de part en part est raccordé à joint étanche au conduit C. Le raccord 1 comporte, outre la partie femelle 2, une partie mâle 4 fixée à une extrémité du tuyau T à l'aide d'un collier de fixation non représenté dans un souci de clarté ou de toute autre manière appropriée.

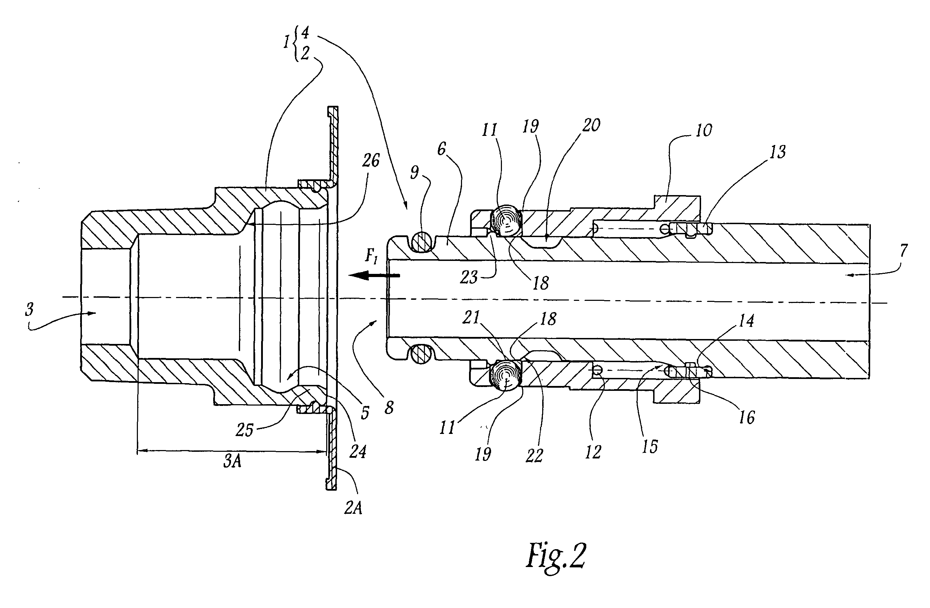

La partie femelle 2 est constituée d'une pièce métallique et creuse, qui est pourvue d'une collerette rapportée et clipsée 2A. Ainsi qu'on peut bien le voir à la figure 2, une gorge annulaire et interne 5 de la partie femelle 2 est ménagée dans la paroi interne qui délimite le passage 3.

La partie mâle 4 comprend une fiche mâle 6, qui est destinée à être emmanchée dans une portion élargie 3A du passage 3. Cette fiche mâle 6 est percée de part en part d'un passage axial 7 pour le liquide de refroidissement. A proximité de son extrémité libre 8, elle est pourvue d'un joint annulaire d'étanchéité 9, réalisé en élastomère et monté dans une gorge annulaire ménagée à cet effet. Outre ce joint 9, une bague coulissante 10 de manoeuvre de billes 11 de verrouillage du raccord 1, un ressort 12 de rappel de cette bague 10 vers l'extrémité libre 8, c'est-à-dire dans le sens d'introduction F₁ (figure 2) de la fiche mâle 6 dans la partie femelle 2, et un anneau de sûreté 13 sont enfilés sur la fiche 6.

A l'exception du joint 9 et de l'anneau 13 qui est réalisé en polymère, les pièces constitutives de la partie mâle 4, en particulier la fiche 6 et la bague 10, sont métalliques.

Les figures 1 à 5 sont schématiques notamment en ce que, dans un souci de clarté, la fiche 6 y est représentée comme étant d'un seul tenant alors que, en réalité, elle résulte de l'assemblage d'au moins deux pièces. Ces dernières sont dissociées lors de l'installation de la bague 10 sur la fiche 6.

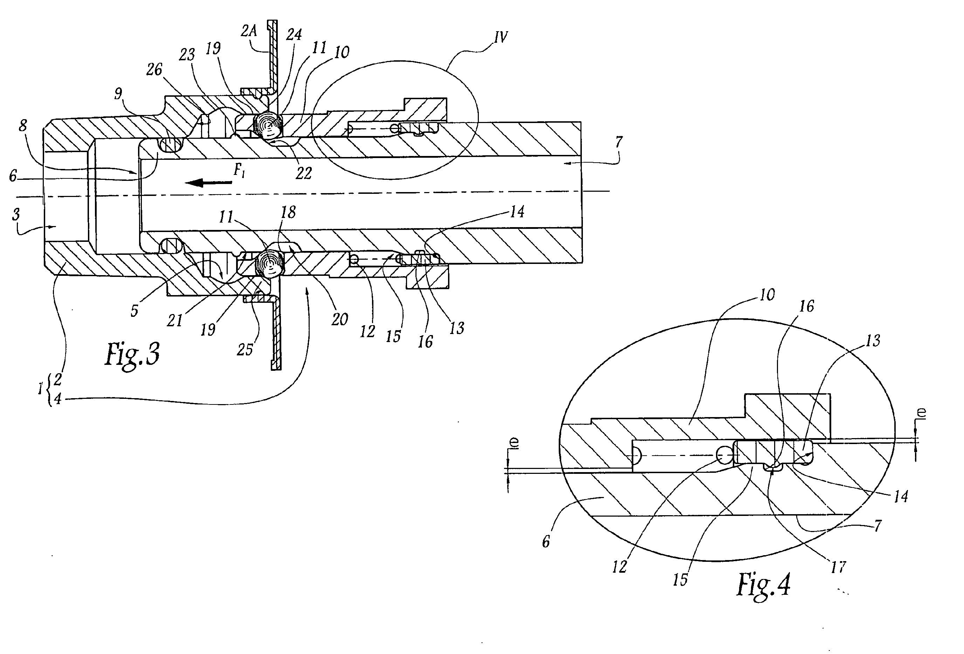

Cette dernière est pourvue d'un épaulement 14 formant butée d'arrêt pour l'anneau 13. Le ressort 12 est comprimé entre la bague 10 et cet anneau 13, qu'il pousse donc contre l'épaulement 14 tout en exerçant un effort de rappel sur la bague 10 en direction de l'extrémité 8. Outre qu'il est immobilisé par le ressort 12, l'anneau 13 est clipsé sur un bossage annulaire 15 que définit la fiche 6 et au niveau duquel cette dernière comporte une rainure périphérique externe 16. Ainsi qu'on peut bien le voir à la figure 4, une saillie radiale interne 17 de l'anneau 13 pénètre dans cette rainure 16, ce qui contribue à l'immobilisation de l'anneau 13 par rapport à la fiche 6. En d'autres termes, la rainure 16 et la saillie 17 forment deux reliefs complémentaires d'immobilisation de l'anneau 13 le long de la fiche 6 par coopération de formes. En variante, la saillie 17 peut équiper la fiche 6, tandis que le creux dans lequel pénètre cette saillie peut être ménagé dans l'anneau 13. Comme on l'aura compris, on monte l'anneau 13 en le déformant élastiquement.

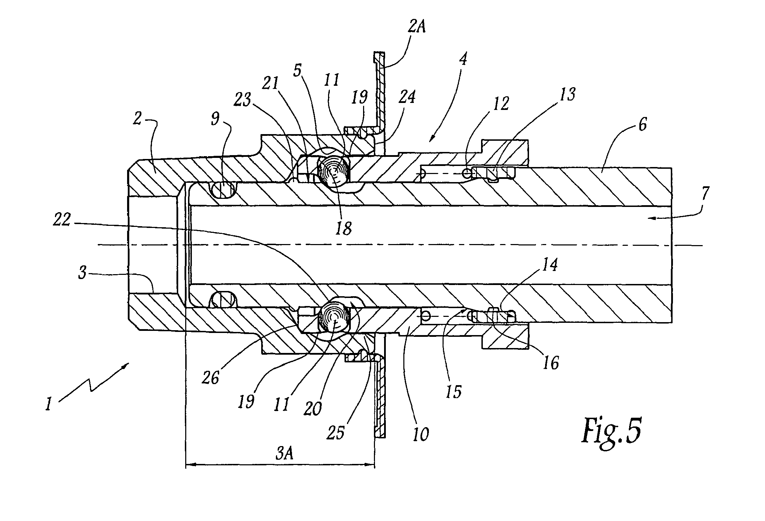

Plusieurs trous radiaux et traversants 18 sont ménagés dans la bague 10. Une bille 11 est montée dans chacun d'eux, de manière à pouvoir être déplacée radialement entre deux positions, dans l'une desquelles elle dépasse latéralement de la bague 10, ce qui est le cas aux figures 1 et 2. Dans leur autre position, les billes 11 sont escamotées radialement dans la bague 10, ce qui est le cas à la figure 5. Chaque trou 18 comporte un resserrement distal de retenue 19, qui a pour fonction d'empêcher la bille 11 se trouvant dans ce trou 18 de s'en échapper.

Pour pouvoir être escamotées, les billes 11 doivent se trouver au niveau d'une gorge annulaire et externe 20 de la fiche 6, afin de pouvoir s'y enfoncer. La bague 10 est mobile le long de la fiche 6 entre deux positions, dans l'une desquelles les billes 11 se trouvent au niveau de cette gorge 20. Dans l'autre position de la bague 10, les billes 11 se trouvent au niveau d'une surface externe 21 que comporte la fiche 6 et qui a un diamètre supérieur à celui du fond de la gorge 20. Cette autre position, vers laquelle le ressort 12 rappelle la bague 10, est décalée axialement, dans le sens d'introduction F₁, de la position dans laquelle les billes 11 se trouvent au niveau de la gorge 20. La surface 21 a un diamètre tel que, si les billes 11 sont à son niveau, elle contraint ces billes 11 à dépasser à l'extérieur de la bague 10. Une rampe 22 relie le fond de la gorge 20 à la surface 21.

La fiche 6 est pourvue d'un bourrelet annulaire 23 qui borde la surface 21 et qui, en ne pouvant pas être franchi par les billes 11, forme une butée d'arrêt pour l'ensemble mobile constitué de la bague 10 et de ces billes 11.

Ainsi qu'on peut le voir à la figure 4, la bague 10 est montée avec un jeu e sur la fiche 6 et avec un jeu moindre sur l'anneau 13. De ce fait, elle coulisse sur l'anneau 13 et non sur la fiche 6. En d'autres termes, l'anneau 13 forme un guide de coulissement pour la bague 10. Grâce à un choix approprié du matériau de l'anneau 13, le coefficient de frottement du matériau de la bague 10 sur le matériau de cet anneau 13 est inférieur au coefficient de frottement du matériau de la bague 10 sur le matériau de la fiche 6. Tel est le cas lorsque, comme dans l'exemple représenté, l'anneau 13 est en polymère, alors que la fiche 6 et la bague 10 sont métalliques. Cela facilite le coulissement de la bague 10 le long de la fiche 6, ce qui est avantageux.

L'anneau 13 est positionné le long de la fiche 6 de manière à n'être visible que lorsque la bague 10 est dans la position illustrée à la figure 1 ou à la figure 2, c'est-à-dire dans la position où elle place les billes 11 au niveau de la surface 21. Lorsqu'elle est dans son autre position, c'est-à-dire dans la position où elle place les billes 11 au niveau de la gorge 20, la bague 10 masque l'anneau 13, ce qui est le cas à la figure 5. L'anneau 13 forme donc un repère visuel, à l'aide duquel on peut aisément et rapidement déterminer la position de la bague 10 et donc celle des billes 11, même si celles-ci sont cachées.

Afin qu'il soit particulièrement facile de déterminer si l'anneau 13 est visible ou masqué par la bague 10, l'anneau 13 est réalisé de manière à avoir un aspect visuel très différent de celui de la fiche 6. Dans ce sens, il a une couleur nettement différente de celle de la fiche 6. De plus, le fait que l'anneau 13 est réalisé en polymère, c'est-à-dire en un matériau différent de celui de la fiche 6 qui est métallique, facilite également la différenciation visuelle de cet anneau 13 et de la fiche 6.

A l'inverse, la collerette 2A et l'anneau 13 ont la même couleur et sont réalisés dans le même matériau, tout en appartenant à des parties différentes 2 et 4 du même raccord 1. Le fait qu'elles ont des aspects coordonnés permet de les utiliser comme des repères visuels pour s'assurer que ces parties 2 et 4 vont ensemble, ce qui est avantageux.

Sur la figure 2, la partie femelle 2 et la partie mâle 4 du raccord 1 sont dissociées. Le rappel alors exercé par le ressort 12 fait que la bague 10 est dans la position où elle place les billes 11 au niveau de la surface 21 et où ces billes 11 sont donc contraintes d'être en saillie hors de la bague 10.

Pour assembler les parties femelle 2 et mâle 4 du raccord 1, on introduit puis on enfonce l'extrémité 8 de la fiche 6 dans la partie femelle 2. Les billes 11 rencontrent alors le bord distal 24 de la partie femelle 2. Ce bord distal 24 empêche les billes 11 de pénétrer dans la portion élargie 3A du passage 3, jusqu'à ce que la gorge 20 ait atteint ces billes 11 du fait d'un coulissement de la fiche 6 dans la bague 10, à l'encontre de l'effort du ressort 12. Lorsque tel est le cas, le raccord 1 est tel qu'illustré à la figure 3 et les billes 11 pénètrent dans la gorge 20, ce qui leur permet de franchir un resserrement 25 qui sépare la gorge 5 du bord distal 24. Lorsque, l'introduction de la fiche 6 dans la partie femelle 2 se poursuivant, les billes 11 dans la gorge 20 atteignent la gorge 5, la rampe 22 les repousse dans cette gorge 20, du fait de l'effort de rappel exercé par le ressort 12. Cet effort conduit à un coulissement de la bague 10 et de la fiche 6 l'une par rapport à l'autre jusqu'à ce que le raccord 1 soit tel qu'illustré à la figure 1. En réduisant les forces de frottement, l'anneau 13 facilite ce coulissement, ce qui réduit le risque d'un positionnement incorrect de la fiche 6 à l'issue du raccordement et donc d'un mauvais verrouillage des parties femelle et mâle du raccord 1 l'une dans l'autre, conformément au but de l'invention.

Sur la figure 1, la surface 21 contraint les billes 11 à dépasser latéralement de la bague 10 et à pénétrer dans la gorge 5, si bien que ces billes 11 verrouillent l'assemblage des parties femelle et mâle du raccord 1. Le joint 9 assure alors l'étanchéité du raccordement des passages 3 et 7.

Si, à l'issue du montage de la partie mâle 4 sur la partie femelle 2, la fiche 6 reste trop enfoncée, c'est-à-dire telle qu'illustrée à la figure 5, malgré l'action du ressort 12, la bague 10 masque l'anneau 13, ce qui signifie que les billes 11 ne se trouvent pas au niveau de la surface 21, c'est-à-dire dans leur position de verrouillage. L'opérateur remarque aisément que la bague 10 masque l'anneau 13. Dès lors, il peut corriger la position de la fiche 6 par rapport à la partie femelle 2 et empêcher ainsi une éjection accidentelle et dangereuse de la partie mâle 4, conformément au but de l'invention.

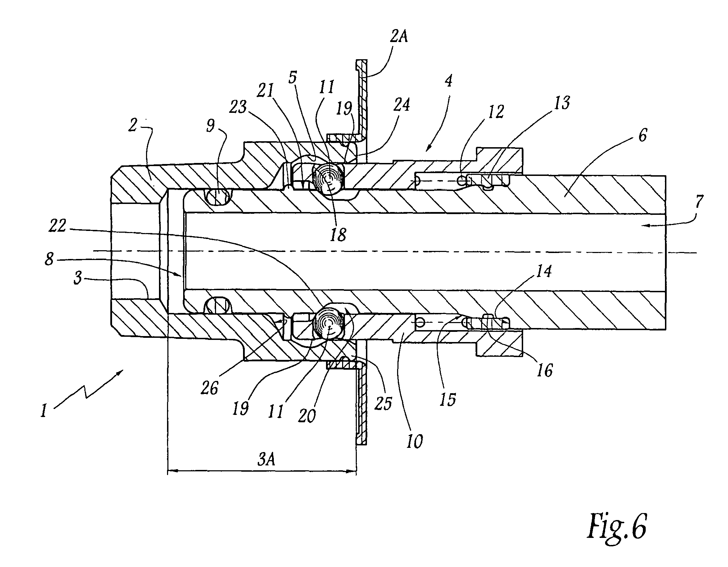

Sur la figure 6, l'opérateur n'a pas suffisamment enfoncé la fiche 6 lors du montage de la partie mâle 4 sur la partie femelle 2, si bien que les billes 11 n'ont pas atteint la gorge 5. Alors que les frottements du joint 9 sur la partie femelle 2 peuvent lui donner l'impression que la fiche 6 est correctement verrouillée, l'opérateur s'aperçoit aisément que tel n'est pas le cas puisque la bague 10 masque l'anneau 13. Dès lors, il peut effectuer une action correctrice.

Pour dissocier les parties femelle 2 et mâle 4 alors qu'elles sont telles qu'illustrées à la figure 1, on pousse axialement la fiche 6 en direction de l'intérieur de la partie femelle 2, jusqu'à ce qu'elle soit telle qu'illustrée à la figure 5. Lors de cela, la bague 10 est stoppée par une butée interne 26 définie par la partie femelle 2. Une fois que la fiche 6 et la bague 10 sont dans leurs positions de la figure 5, on les extrait en même temps de la partie femelle 2.

Plusieurs tuyaux T, dont au moins un tuyau d'amenée et un tuyau d'évacuation du liquide de refroidissement, doivent être raccordés au moule M à l'aide de plusieurs raccord 1. Lorsque deux tuyaux T ne doivent pas être intervertis, leurs raccordements s'effectue à l'aide de deux raccords 1 qui se distinguent l'un de l'autre par les couleurs de leurs collerettes 2A respectives et de leur anneaux 13 respectifs. Par exemple, un raccord 1 dont la collerette 2A et l'anneau 13 sont bleus peut être employé pour raccorder le tuyau d'amenée, tandis qu'un raccord 1 dont la collerette 2A et l'anneau 13 sont rouges peut être employé pour raccorder le tuyau d'évacuation. Cela tend à réduire le risque d'une erreur de raccordement et rend plus sûr l'emploi du moule M, conformément au but de l'invention.

L'invention ne se limite pas au mode de réalisation décrit précédemment. En particulier, le joint 9 peut équiper non pas la fiche 6 mais la partie femelle 2.

## Revendications

1. Partie mâle de raccord rapide de jonction temporaire d'un tuyau (T) d'acheminement d'un liquide de refroidissement vers ou depuis un conduit (C) ménagé dans un moule (M) et destiné à être parcouru par le liquide de refroidissement, cette partie mâle comprenant une fiche mâle (6) destinée à être introduite dans une partie femelle (2) du raccord rapide, des billes mobiles (11) de verrouillage de la fiche mâle (6) dans ladite partie femelle (2) et une bague (10) de manoeuvre des billes de verrouillage (11), cette bague de manoeuvre (10) étant mobile par rapport à la fiche mâle (6) entre une première position (figure 5), dans laquelle les billes de verrouillage (11) peuvent être escamotées radialement à l'intérieur de la bague de manoeuvre (10), et une deuxième position (figures 1 et 2) qui est décalée axialement de la première position dans le sens (F₁) d'introduction de la fiche mâle (6) dans ladite partie femelle (2), vers laquelle est rappelée élastiquement ladite bague de manoeuvre (10) et dans laquelle les billes de verrouillage (11) sont contraintes de dépasser latéralement de la bague de verrouillage (10), la fiche mâle (6) étant percée d'un passage (7) pour le liquide de refroidissement, **caractérisée en ce que** cette fiche mâle (6) porte un repère visuel (13) qui est au moins partiellement découvert lorsque ladite bague de manoeuvre (10) est dans sa deuxième position et qui est masqué par ladite bague de manoeuvre (10) lorsque cette bague de manoeuvre (10) est dans sa première position.

2. Partie mâle selon la revendication 1, **caractérisée en ce que** le repère visuel est un anneau (13) qui est enfilé sur ladite fiche mâle (6) et qui a un aspect différent de celui de cette fiche mâle (6).

3. Partie mâle selon la revendication 2, **caractérisée en ce que** ladite fiche mâle (6) comporte une butée (14) pour ledit anneau (13) et est pourvue d'un ressort (12) qui rappelle la bague de verrouillage (10) vers sa deuxième position tout en poussant ledit anneau (13) contre ladite butée (14).

4. Partie mâle selon l'une quelconque des revendications 2 et 3, **caractérisée en ce que** ledit anneau (13) est réalisé en polymère.

5. Partie mâle selon l'une quelconque des revendications 2 à 4, **caractérisée en ce que** ledit anneau (13) guide la bague de verrouillage (10) lors d'un mouvement de coulissement par rapport à la fiche mâle (6) et est réalisé dans un matériau tel que le coefficient de frottement du matériau de la bague de verrouillage (10) sur le matériau dudit anneau (13) est inférieur au coefficient de frottement du matériau de la bague de verrouillage (10) sur le matériau de ladite fiche mâle (6).

6. Partie mâle selon l'une quelconque des revendications 2 à 5, **caractérisée en ce que** ledit anneau (13) est clipsé sur un relief (15, 16) de la fiche mâle (6).

7. Partie mâle selon la revendication 6, **caractérisée en ce que** ledit anneau (13) porte un relief radial interne (17) apte à être engagé dans ou sur un relief complémentaire périphérique externe (16) de la fiche et à y être immobilisé par coopération de formes.

8. Raccord rapide de jonction temporaire d'un tuyau (T) d'acheminement d'un liquide de refroidissement vers ou depuis un conduit (C) ménagé dans un moule (M) et destiné à être parcouru par le liquide de refroidissement, ce raccord rapide comprenant une partie femelle (2) comportant au moins un relief interne (5) tel que des billes (11) peuvent s'y engager de manière à verrouiller le raccord en position assemblée, **caractérisé en ce qu'**il comporte une partie mâle (4) selon l'une quelconque des revendications précédentes et complémentaire de la partie femelle (2).

9. Raccord rapide selon la revendication 8, **caractérisé en ce que** ladite partie femelle (2) et ladite partie mâle (4) équipent respectivement le moule (M) et le tuyau (T).

10. Raccord rapide selon l'une quelconque des revendications 8 et 9, **caractérisé en ce que** la partie femelle (2) porte un repère visuel (2A) qui a un aspect coordonné avec celui du repère visuel (13) porté par la fiche mâle (6).

11. Jeu de premier et deuxième raccords, **caractérisé en ce que** chacun de ces premier et deuxième raccords (1) est selon la revendication 10 et **en ce que** l'aspect des repères visuels (2A, 13) du premier raccord (1) diffère de l'aspect des repères visuels (2A, 13) du deuxième raccord (1).

## Claims

1. A quick coupling male portion for making a temporary junction between a hose (T) for conveying a cooling liquid to or from a duct (C) formed in a mold (M) that is to have the cooling liquid pass therethrough, said male portion comprises a male plug (6) for inserting in a female portion (2) of the quick coupling, moving balls (11) for locking the male plug (6) in said female portion (2), and a locking ring (10) for driving the locking balls (11), said locking ring (10) being movable relative to the male plug (6) between a first position (Figure 5) in which the locking balls (11) can be retracted radially inside the locking ring (10), and a second position (Figures 1 and 2) that is axially offset from the first position in the insertion direction (F₁) for inserting the male plug (6) into said female portion (2), towards which said locking ring (10) is urged resiliently and in which the locking balls (11) are constrained to project laterally from the locking ring (10), the male plug (6) being pierced by a passage (7) for the cooling liquid, the male portion being **characterized in that** said male plug (6) carries a visual indicator (13) that is at least partially uncovered when said locking ring (10) is in its second position, and that is masked by said locking ring (10) when said locking ring is in its first position.

2. A male portion according to claim 1, **characterized in that** the visual indicator is an indicator ring (13) that is engaged on said male plug (6) and that is of an appearance that is different from that of the male plug (6).

3. A male portion according to claim 2, **characterized in that** said male plug (6) includes an abutment (14) for said indicator ring (13) and is provided with a spring (12) urging the locking ring (10) towards its second position while urging said indicator ring (13) against said abutment (14).

4. A male portion according to claim 2 or claim 3, **characterized in that** said indicator ring (13) is made of polymer.

5. A male portion according to any one of claims 2 to 4, **characterized in that** said indicator ring (13) guides the locking ring (10) during sliding movement relative to the male plug (6) and is made of a material such that the coefficient of friction of the material of the locking ring (10) on the material of said indicator ring (13) is smaller than the coefficient of friction of the material of the locking ring (10) on the material of said male plug (6).

6. A male portion according to any one of claims 2 to 5, **characterized in that** said indicator ring (13) is clipped onto a portion in relief (15, 16) of the male plug (6).

7. A male portion according to claim 6, **characterized in that** said indicator ring (13) carries an internal radially-extending portion in relief (17) suitable for engaging in or on a complementary external peripheral portion in relief (16) on the plug and for being held stationary relative thereto by co-operation between their shapes.

8. A quick coupling for making a temporary junction between a hose (T) for conveying cooling liquid to or from a duct (C) formed in a mold (M) that is to have the cooling liquid pass therethrough, the quick coupling comprising a female portion (2) having at least one internal portion in relief (5) suitable for enabling balls (11) to be engaged therein so as to lock the coupling in the coupled-together position, the coupling being **characterized in that** it includes a male portion (4) according to any preceding claim and complementary to the female portion (2).

9. A quick coupling according to claim 8, **characterized in that** said female portion (2) and said male portion (4) are fitted respectively to the mold (M) and to the hose (T).

10. A quick coupling according to claim 8 or claim 9, **characterized in that** the female portion (2) carries a visual indicator (2A) of appearance that matches that of the visual indicator ring (13) carried by the male plug (6).

11. A set of first and second couplings, **characterized in that** each of said first and second couplings (1) is a coupling in accordance with claim 10, and **in that** the appearance of the visual indicators (2A, 13) of the first coupling (1) differs from the appearance of the visual indicators (2A, 13) of the second coupling (1).

## Patentansprüche

1. Einsteckteil für eine Schnellkupplung zur temporären Verbindung eines Leitungsrohrs (T) für eine Kühlflüssigkeit zu oder von einem Kanal (C), der in eine Form (M) eingearbeitet ist und dazu dient, von der Kühlflüssigkeit durchströmt zu werden, wobei dieses Einsteckteil einen Stecker (6), der vorgesehen ist, in einem Aufnahmeteil (2) der Schnellkupplung aufgenommen zu werden, bewegliche Kugeln (11) zur Verriegelung des Steckers (6) in dem Aufnahmeteil (2) und eine Hülse (10) zur Betätigung der Verriegelungskugeln (11) umfasst, wobei die Betätigungshülse (10) in Bezug auf den Stecker (6) beweglich ist zwischen einer ersten Position (Figur 5), in der die Verriegelungskugeln (11) radial im Inneren der Betätigungshülse (10) aufgenommen werden, und einer zweiten Position (Figuren 1 und 2), die axial zu der ersten Position in Richtung (F₁) der Einführung des Steckers (6) in das Aufnahmeteil (2) versetzt ist, gegen die die Betätigungshülse (10) elastisch vorgespannt ist und in der die Verriegelungskugeln (11) gezwungen sind, seitlich über die Verriegelungshülse (10) hinauszuragen, wobei der Stecker (6) von einem Durchgang (7) für die Kühlflüssigkeit durchgriffen ist, **dadurch gekennzeichnet, dass** der Stecker (6) eine sichtbare Markierung (13) trägt, die zumindest teilweise unbedeckt ist, wenn die Betätigungshülse (10) in ihrer zweiten Stellung ist, und die von der Betätigungshülse (10) überdeckt ist, wenn diese Betätigungshülse (10) in ihrer ersten Stellung ist.

2. Einsteckteil nach Anspruch 1, **dadurch gekennzeichnet, dass** die sichtbare Markierung ein Ring (13) ist, der auf den Stecker (6) aufgesetzt ist und der eine unterschiedliche Erscheinungsform zu der dieses Steckers (6) aufweist.

3. Einsteckteil nach Anspruch 2, **dadurch gekennzeichnet, dass** der Stecker (6) einen Anschlag (14) für den Ring (13) aufweist und mit einer Feder (12) versehen ist, die die Verriegelungshülse (10) in ihre zweite Stellung vorspannt, wobei sie den Ring (13) gegen den Anschlag (14) drückt.

4. Einsteckelement nach einem beliebigen der Ansprüche 2 und 3, **dadurch gekennzeichnet, dass** der Ring (13) aus Polymer hergestellt ist.

5. Einsteckteil nach einem beliebigen der Ansprüche 2 bis 4, **dadurch gekennzeichnet, dass** der Ring (13) die Verriegelungshülse (10) bei einer Gleitbewegung in Bezug auf den Stecker (6) führt und aus einem solchen Material hergestellt ist, dass der Reibungskoeffizient des Materials der Verriegelungshülse (10) auf dem Material des Rings (13) kleiner ist als der Reibungskoeffizient des Materials der Verriegelungshülse (10) auf dem Material des Steckers (6).

6. Einsteckelement nach einem beliebigen der Ansprüche 2 bis 5, **dadurch gekennzeichnet, dass** der Ring (13) auf eine Erhebung (15, 16) des Steckers (6) aufgeklipst ist.

7. Einsteckteil nach Anspruch 6, **dadurch gekennzeichnet, dass** der Ring (13) ein inneres radiales Relief (17) trägt, das geeignet ist, in oder auf ein komplementäres äußeres Umfangsrelief (16) des Steckers einzugreifen und durch Formenschluss dort festgelegt zu werden.

8. Schnellkupplung zur temporären Verbindung eines Rohres (T) zur Beförderung einer Kühlflüssigkeit zu oder von einem Kanal (C), der in eine Form (M) eingearbeitet ist und vorgesehen ist, von der Kühlflüssigkeit durchströmt zu werden, wobei diese Schnellkupplung ein Aufnahmeteil (2) umfasst, das mindestens ein Innenrelief (5) derart aufweist, dass Kugeln (11) dort eingreifen können, derart, dass die Kupplung in zusammengesetztem Zustand verriegelt ist, **dadurch gekennzeichnet, dass** sie ein Einsteckteil (4) nach einem beliebigen der vorhergehenden Ansprüche und komplementär zu dem Aufnahmeteil (2) aufweist.

9. Schnellkupplung nach Anspruch 8, **dadurch gekennzeichnet, dass** das Aufnahmeteil (2) und das Einsteckteil (4) jeweils die Form (M) und das Rohr (T) ausrüsten.

10. Schnellkupplung nach einem beliebigen der Ansprüche 8 und 9, **dadurch gekennzeichnet, dass** das Aufnahmeteil (2) eine sichtbare Markierung (2A) trägt, die eine abgestimmte Erscheinungsform mit der der visuellen Markierung (13) aufweist, die von dem Stecker (6) getragen wird.

11. Satz aus einer ersten und einer zweiten Kupplung, **dadurch gekennzeichnet, dass** diese erste und diese zweite Kupplung nach Anspruch 10 ausgebildet sind und dass die Erscheinungsform der sichtbaren Markierungen (2A, 13) der ersten Kupplung (1) sich von der Erscheinungsform der sichtbaren Markierungen (2A, 13) der zweiten Kupplung (1) unterscheidet.
